# EUROPÄISCHE PATENTSCHRIFT

(11) **EP 1 031 635 B1**
(45) Veröffentlichungstag und Bekanntmachung des Hinweises auf die Patenterteilung: **15.10.2003**
(21) Anmeldenummer: 00102817.4
(22) Anmeldetag: 11.02.2000
(51) Int. Cl.: C22B 26/22, C22B 9/05, C01F 5/30, C07F 3/02

(54) **Aktiviertes Magnesiummetall**
Activated magnesium metal
Magnésium métallique activé

(30) Priorität: 24.02.1999 DE 19907856
(43) Veröffentlichungstag der Anmeldung: 30.08.2000
(73) Patentinhaber: Goldschmidt AG, 45127 Essen (DE)
(72) Erfinder: Frommeyer, Georg, Prof. Dr., 40699 Erkrath (DE); Knott, Wilfried, Dr., 45141 Essen (DE); Weier, Andreas, Dr., 45289 Essen (DE)

(56) Entgegenhaltungen:
- EP-A- 0 884 123
- WO-A-99/64287
- DE-A- 2 362 292
- DE-A- 3 247 361
- US-A- 5 069 894
- US-A- 5 198 207
- US-A- 5 992 500
- DATABASE WPI Section Ch, Week 198602 Derwent Publications Ltd., London, GB; Class E19, AN 1986-012166 XP002139673 & SU 477 626 A (VAVILOV V V), 15. August 1985 (1985-08-15)
- DATABASE WPI Section Ch, Week 199417 Derwent Publications Ltd., London, GB; Class L02, AN 1994-141196 XP002139674 & JP 06 088154 A (MITSUBISHI KASEI CORP), 29. März 1994 (1994-03-29)

## Beschreibung

Die Erfindung betrifft aktiviertes Magnesiummetall, ein Verfahren zur Aktivierung von Magnesiummetall und dessen Verwendung zur Herstellung von Organo-Magnesiumverbindungen.

In vielen Bereichen der Synthese sind metallorganische Verbindungen, speziell Mg-organische Verbindungen, zu unverzichtbaren Hilfsmitteln geworden. Nach wie vor bereitet die Herstellung dieser wertvollen Reagentien jedoch Schwierigkeiten, die nicht zuletzt auf der mangelnden Reaktivität der verwendeten Metalle beruhen. Die Anstrengungen zur Überwindung dieser Schwierigkeiten sind vielfältig, da durch die Reaktionsträgheit der eingesetzten Metalle nicht nur die Wirtschaftlichkeit und Flexibilität der Herstellverfahren leiden, sondern auch Gefahrenpotentiale durch unkontrollierbare Spontanreaktionen, hervorgerufen durch Kumulation von Reaktanden, aufgebaut werden.

So bedient man sich z. B. bei der Herstellung von Grignard-Verbindungen der mechanischen Aktivierung von Mg-Spänen (J. Org. Chem. 1991, 56, 698-703), des Einsatzes Kalium-reduzierten Rieke-Magnesiums (J. Am. Chem. Soc. 1972, 94, 7178, Organic Syntheses, Wiley New York, 1988; Collect. Vol.VI, 845), der Atomverdampfung hochreinen Magnesiums in ein Solvens (Helv. Chim. Acta 1981, 64, 2606), der Verwendung von Mg-Anthracen (Angew. Chem., Int. Ed., Engl. 1980, 19, 818 und ibid. 1985, 24, 960) und der Ultrabeschallung kommerziell verfügbaren Grignard-Magnesiums (J. Chem. Soc. Rev. 1987, 16, 239 und ibid. 1987, 16, 275).

Unter den Gesichtspunkten Sicherheit, Wirtschaftlichkeit und Scale-Up-Fähigkeit hat kaum eines der genannten Laborverfahren die Chance, Eingang in eine technische Synthese zu nehmen.
Es wurde nun überraschend gefunden, daß sich ein hochaktives und zugleich handhabungssicheres Magnesiummetall dadurch gewinnen läßt, daß man schmelzflüssiges Magnesiummetall mit einer kleinen Menge Magnesiumhydrid beaufschlagt oder ein Gemisch, bestehend aus Magnesiummetall und Magnesiumhydrid, bis zum Schmelzen erhitzt. Nach dem Abkühlen wird ein von Oxidhäuten und anderen passivierenden Schichten befreites, hochglänzendes Magnesium erhalten, das sich als aktives Ausgangsmaterial zur Erzeugung von Grignard-Reagentien und Mg-Alkylen eignet. Das auf diesem Wege in stückiger Form gewonnene Magnesium ist von vielen, die Oberfläche vergrößernden Poren durchsetzt. Der hohe Glanz erweist sich unter üblichen Umweltbedingungen als stabil.

Überraschenderweise geht die beobachtete Passivierung gegenüber üblichen Umwelteinflüssen einher mit einer Aktivierung des erfindungsgemäß behandelten Metalls für metallorganische Reaktionen.

Eine erste Ausführungsform der vorliegenden Erfindung besteht somit in aktiviertem Magnesiummetall, das durch die Umsetzung von schmelzflüssigem Magnesium mit Magnesiumhydrid erhältlich ist.

Eine weitere Ausführungsform der vorliegenden Erfindung besteht in dem Verfahren zur Herstellung aktivierten Magnesiummetalls durch Umsetzung von schmelzflüssigem Magnesiummetall mit Magnesiumhydrid.

Der Begriff Magnesium im Sinne der vorliegenden Erfindung umfaßt neben reinem Magnesium auch entsprechende Magnesiumbasislegierungen, die wenigstens 90 Gew.-% Magnesium enthalten.

Das Stoffmengenverhältnis von Magnesiummetall zu Magnesiumhydrid liegt dabei im Bereich von 1 zu 0,0005 bis 1 zu 0,1, besonders bevorzugt von 1 zu 0,005 bis 1 zu 0,05, insbesondere 1 zu 0,005 bis 1 zu 0,025. Innerhalb der vorgenannten Bereiche spielen sowohl wirtschaftliche Erwägungen eine besondere Rolle wie auch die Möglichkeit, die Behandlung oder Umsetzung mehrfach zu wiederholen.

Für den Fachmann vollkommen verblüffend ist auch der Befund, daß sich bereits grobe Partikel des mit Hilfe von Magnesiumhydrid aktivierten Magnesiummetalls beispielsweise für die Umsetzung mit Organo-Halogenverbindungen eignen. Späne in der Größenordnung von 4 bis 5 mm reagieren ohne signifikante Induktionsperiode nahezu quantitativ zur gewünschten Organo-Magnesiumhalogenidverbindung ab.

Eine weitere bevorzugte Ausführungsform der vorliegenden Erfindung besteht somit in der Verwendung von aktiviertem Magnesiummetall zur Herstellung von Organo-Magnesiumverbindungen, wobei man aktiviertes Magnesiummetall, insbesondere in Form von Pulvern, Spänen oder in stückiger Form, in an sich bekannter Weise mit an sich bekannten organischen Verbindungen umsetzt. Insbesondere ist an dieser Stelle die Herstellung von Grignard-Verbindungen genannt, die in einer Vielzahl von Lehrbüchern der organischen und metallorganischen Chemie beschrieben ist.

Das für den Prozeß verwendete, kommerzielle Magnesium wird beispielsweise in einer Reinheit von ≥ 99,5 % eingesetzt. Als Magnesiumhydrid eignet sich insbesondere das bei hohen Temperaturen aus den Elementen auf dem Wege der Autokatalyse gewonnene MgH₂ (EP 0 490 156 A), aber auch jedes auf anderem Wege erzeugte Magnesiumhydrid.

Das nach dem erfindungsgemäßen Verfahren gewonnene aktivierte Magnesiummetall zeigt bereits sichtbare Unterschiede zum nichtbehandelten Magnesiummetall des Handels. Die Bruch- und Schnittflächen des stark porösen und zerklüfteten Metalls sind hellsilbrig glänzend und zeigen auch nach wochenlanger Lagerung in gewöhnlicher Atmosphäre keine Neigung zum Anlaufen.

Das nach schmelzmetallurgischem Prozeß hergestellte aktivierte Magnesiummetall besitzt außerdem noch die gegenüber unbehandel-tem Magnesiummetall deutlich erhöhte Sprödigkeit, so daß sich die Zerkleinerung des grobstückigen Materials recht einfach gestaltet.

Grignard-Verbindungen werden gegebenenfalls in situ durch Umsetzung von Magnesiumspänen mit Alkyl- oder Arylhalogeniden üblicherweise in wasserfreien Lösungsmitteln hergestellt.

Letzte Evidenz für den Aktivitätsgewinn liefert der direkte Reaktivitätsvergleich des nach dem erfindungsgemäßen Verfahren hergestellten Magnesiummetalls mit handelsüblichen Grignard-Magnesiumspänen, die gemäß Stand der Technik aktiviert wurden.

In der Tradition etlicher Arbeiten (ibid.) stehend, die sich mit diesem Problem beschäftigt haben, ist in J. Organometal. Chem. 6, 97-99 (1966) die Reaktion zwischen p-(Dimethylamino)-brombenzol und aktiviertem Magnesium beschrieben. Magnesiumspäne werden für 24 Stunden oder länger unter Inertgas gerührt und erlangen erst auf diesem Wege eine Aktivität, die es erlaubt, die Reaktion mit p-(Dimethylamino)-brombenzol in siedendem Tetrahydrofuran ohne den Einsatz von hier üblichen Initiatoren, wie z. B. Iod oder Alkylhalogeniden, durchzuführen (s. a. Houben-Weyl, Methoden der Organischen Chemie, 13/ 2a, S. 58). Die Reaktionszeit beträgt dann 3 Stunden.

Das nach dem erfindungsgemäßen Verfahren hergestellte Magnesiummetall bedarf weder der mechanischen noch der chemischen Aktivierung, damit es binnen einer Stunde nahezu quantitativ mit p-(Dimethylamino)-brombenzol in THF zur entsprechenden Grignard-Verbindung reagiert.

Die Aktivität des nach dem erfindungsgemäßen Verfahren hergestellten Magnesiummetalls war für den Fachmann nicht vorhersehbar und macht dieses aktivierte Metall zu einem wertvollen Ausgangsmaterial in der Synthese Mg-organischer Verbindungen.

### Ausführungsbeispiele

### Beispiel 1

### Herstellung von aktivem Magnesium

Eine Stahlkapsel wurde mit einer Mischung, bestehend aus 500 g eines 99,5 gew.-%igen Magnesiumpulvers und 10 g eines 95 gew.-%igen autokatalytisch hergestellten Magnesiumhydrids (Tego Magnan®), beschickt und in einem inertisierten Induktionsofen auf 750 °C erhitzt. Die Temperatur wurde ca. 3 Minuten gehalten; dann wurde die Reaktionsmischung abgekühlt. Nach Abkühlen wurde ein von hellsilbrig glänzenden Hohlräumen durchzogener Regulus erhalten, der selbst nach 3 Monaten Lagerung an gewöhnlicher Atmosphäre weder an diesen durch den Prozeß generierten Hohlraumoberflächen, noch an der hellsilbernen Sägeschnittfläche Neigung zum Anlaufen zeigte. Durch einen mit geringer Drehzahl arbeitenden Bohrer wurden Mg-Späne in einer Größe von ca. 2 bis 5 mm gewonnen.

### Beispiel 2

### Verwendung des aktiven Magnesiums zur Herstellung von p-(Dimethylamino) -phenylmagnesiumbromid

0,9 g (0,037 Mol) der Mg-Späne gemäß Beispiel 1 wurden in einem 250-ml-Vierhalskolben mit aufgesetztem Kühler und Tropftrichter unter Magnetrührung vorgelegt und mit 80 ml absolutiertem Tetrahydrofuran überschichtet und dann auf 55 °C erwärmt. Man tropfte eine Lösung, bestehend aus 7,4 g (0,037 Mol) p-(Dimethylamino)-brombenzol in 55 ml absolutiertem Tetrahydrofuran langsam zu. Nach Zugabe von etwa 12 ml der Halogenidlösung sprang die Grignard-Reaktion an (Graufärbung und leichtes Gasen). Durch zügiges Zutropfen der restlichen Lösung wurde der Reaktionsansatz bei einer Temperatur von 64 °C gehalten. Nach beendeter Zugabe wurde auf leichten Rückfluß erwärmt. Nach einer Gesamtreaktionszeit von einer Stunde ließ man den tiefschwarzen Ansatz erkalten. Die acidimetrische Titration eines nach Zentrifugieren gewonnenen, klaren leichtgelblichen Aliquots belegte einen nahezu quantitativen Mg-Umsatz (≥ 98 %).

## Patentansprüche

1. Aktiviertes Magnesiummetall, frei von Oxidhäuten und anderen passivierenden Schichten, erhältlich durch Umsetzung von schmelzflüssigem Magnesiummetall mit Magnesiumhydrid, wobei man ein Stoffmengenverhältnis von Magnesiummetall zu Magnesiumhydrid im Bereich von 1 zu 0,0005 bis 1 zu 0,1, insbesondere von 1 zu 0,005 bis 1 zu 0,05, bevorzugt 1 zu 0,005 bis 1 zu 0,025, einsetzt.

2. Verfahren zur Aktivierung von Magnesiummetall durch Umsetzung von schmelzflüssigem Magnesiummetall mit Magenesiumhydrid, wobei man ein Stoffmengenverhältnis von Magnesiummetall zu Magnesiumhydrid im Bereich von 1 zu 0,0005 bis 1 zu 0,1, insbesondere von 1 zu 0,005 bis 1 zu 0,05, bevorzugt 1 zu 0,005 bis 1 zu 0,025, einsetzt.

3. Verwendung von aktiviertem Magnesiummetall gemäß den Ansprüchen 1 und 2 zur Herstellung von Organo-Magnesiumverbindungen, **dadurch gekennzeichnet, daß** man aktiviertes Magnesiummetall, inbesondere in Form von Pulvern, Spänen oder stückiger Form, in an sich bekannter Weise mit an sich bekannten organischen Verbindungen umsetzt.

4. Verwendung nach Anspruch 3 zur Herstellung von Grignard-Verbindungen.

## Claims

1. Activated magnesium metal free from oxide skins and other passivating layers, obtainable by reacting molten magnesium metal with magnesium hydride, wherein the quantitative ratio of magnesium metal to magnesium hydride is in the range from 1:0.0005 to 1:0.1, in particular from 1:0.005 to 1:0.05, preferably 1:0.005 to 1:0.025.

2. Method of activating magnesium metal by reacting molten magnesium metal with magnesium hydride, wherein the quantitative ratio of magnesium metal to magnesium hydride is in the range from 1:0.0005 to 1:0.1, in particular from 1:0.005 to 1:0.05, preferably 1:0.005 to 1:0.025.

3. Use of activated magnesium metal according to Claims 1 and 2 for the preparation of organomagnesium compounds, **characterized in that** activated magnesium metal, in particular in the form of powders, turnings or in piece form, is reacted in a manner known per se with organic compounds known per se.

4. Use according to Claim 3 for the preparation of Grignard compounds.

## Revendications

1. Magnésium métallique activé exempt de croûtes d'oxyde et d'autres couches de passivation, pouvant être obtenu par transformation de magnésium métallique en masse fondue avec de l'hydrure de magnésium, en utilisant un rapport quantitatif de substance de magnésium métallique à hydrure de magnésium dans la plage de 1:0,0005 à 1:0,1, en particulier de 1:0,005 à 1:0,05, de préférence de 1:0,005 à 1:0,025.

2. Procédé pour l'activation de magnésium métallique par transformation de magnésium métallique en masse fondue avec de l'hydrure de magnésium, en utilisant un rapport quantitatif de substance de magnésium métallique à hydrure de magnésium dans la plage de 1:0,0005 à 1:0,1, en particulier de 1:0,005 à 1:0,05, de préférence de 1:0,005 à 1:0,025.

3. Utilisation de magnésium métallique activé selon les revendications 1 et 2 pour la préparation de composés organiques du magnésium, **caractérisée en ce qu'**on transforme du magnésium métallique activé, en particulier sous forme de poudre, de copeaux ou de morceaux, de manière connue en soi avec des composés organiques connus en soi.

4. Utilisation selon la revendication 3 pour la préparation de composés de Grignard.
